# EUROPÄISCHE PATENTANMELDUNG

(11) **EP 2 639 571 A1**
(43) Veröffentlichungstag der Anmeldung: **18.09.2013**
(21) Anmeldenummer: 13000806.3
(22) Anmeldetag: 16.02.2013
(51) Int. Cl.: G01N 21/84

(54) **Verfahren und Vorrichtung zur Messung der Transmission und Reflektion von Strahlung an einem Objekt.**

(30) Priorität: 17.03.2012 DE 102012005477
(71) Anmelder: Forschungszentrum Jülich GmbH, 52425 Jülich (DE)
(72) Erfinder: Bergsträsser, Sergej, 52428 Jülich (DE)

(57) **Zusammenfassung**

Die Erfindung betrifft ein Verfahren und Vorrichtung zur Messung der Transmission und Reflektion von Strahlung an einem Objekt.

Erfindungsgemäß wird in einer Ausführungsform ein Objekt, beispielsweise ein Pflanzenblatt (16) zwischen zwei Spiegelflächen positioniert, die in einem Winkel von kleiner als 180°, vorzugsweise 90° gegeneinander geöffnet sind und mit einer Lampe bestrahlt. Das, durch das Pflanzenblatt (16) hindurch tretende und das daran reflektierte Licht wird von den Spiegelflächen in eine Kamera (18) reflektiert, wo es gleichzeitig registriert wird. Dadurch ist es möglich, die Transmission und Reflektion des Pflanzenblattes (16) gleichzeitig zu messen um damit Informationen über den Stoffwechselzustand des Pflanzenblattes (16) zu erhalten.

## Beschreibung

Die Erfindung betrifft ein Verfahren und eine Vorrichtung zur Messung der Transmission und Reflektion von Strahlung an einem Objekt.

Bei biologischen Untersuchungen von Pflanzen besteht der Bedarf die Reflektions- und Transmissionseigenschaften von Pflanzenblättern zu untersuchen. Insbesondere bei lebenden Blättern geben die gewonnenen Spektren der Reflektion und Transmission von Licht eine Auskunft über Stoffwechselvorgänge in der Pflanze bzw. im Pflanzenblatt. Mit den Reflektions- und Transmissionsdaten können beispielsweise Faktoren, wie der Wasser-, Pigment- oder Chlorophyllgehalt eines Pflanzenblattes bestimmt werden.

Nach dem Stand der Technik werden die Transmissions- und Reflektionsspektren zeitlich nacheinander aufgenommen, zum Beispiel in dem man das Pflanzenblatt umdreht oder Punktmessungen mit einer Ulbrichtkugel durchführt.

Das hat den Nachteil, dass sich zwischen den Messungen die Lichtverhältnisse, beispielsweise durch Schwankungen der Leuchtkraft der Lichtquelle, ändern könnten. Es können keine Messdaten für die Transmission und Reflektion von Licht bzw. elektromagnetischer Strahlung zu identischen Zeitpunkten erhoben werden. Die gewonnenen Messdaten ergeben daher keine Auskunft über den Zustand des Pflanzenblattes zum gleichen physiologischen Zustand, der zeitlich variabel ist, da die Pflanzenblätter komplexe Strukturen aufweisen, die sich in kurzen Zeiträumen dynamisch verändern können, wodurch die Reflektions- und Transmissionswerte beeinflusst werden. Es können keine exakten Absorptionseigenschaften des ganzen Blattes für einen definierten Zeitpunkt berechnet werden.

Bei weiteren Materialien, wie Kunststoffen oder Textilien, wie beispielsweise Baumwolle oder Kunstfasern wird die Qualität regelmäßig überprüft. Dabei besteht der Bedarf, Qualitätsmerkmale, wie die Beschaffenheit, Einheitlichkeit, Schichtdicke und/oder Homogenität zu kontrollieren.

Es ist daher die Aufgabe der Erfindung ein Verfahren und eine Vorrichtung zur Verfügung zu stellen, mit denen die Transmission und Reflektion über alle Regionen eines Objekts, beispielsweise eines gesamten Pflanzenteils, beispielsweise eins Pflanzenblattes, von biologischem Material, eines Kunststoffteiles oder eines Textils bestimmt werden können. Vorteilhaft soll die Reflektion und Transmission der Objekte zu einem identischen Zeitpunkt bestimmt werden.

Ausgehend vom Oberbegriff des Anspruchs 1 sowie des nebengeordneten Anspruchs wird die Aufgabe erfindungsgemäß gelöst, mit den im kennzeichnenden Teil dieser Ansprüche angegebenen Merkmalen.

Mit dem erfindungsgemäßen Verfahren und der Vorrichtung ist es nunmehr möglich, die Reflektion und Transmission von Lichtstrahlen bei einem Objekt, beispielsweise mindestens einem Pflanzenteil, biologischem Material, einem Kunststoffteil oder einem Textil gleichzeitig zu bestimmen und daraus Informationen über den physiologischen Zustand, den Stoffwechselzustand und/oder die Absorptionseigenschaften der untersuchten Teile zu erhalten.

Vorteilhafte Ausgestaltungen der Erfindung sind in den Unteransprüchen angegeben.

Im Folgenden soll die Erfindung in ihrer allgemeinen Form beschrieben werden.

In der allgemeinen Beschreibung wird die Erfindung beispielhaft für ein Pflanzenteil oder ein Pflanzenblatt erläutert. Jedoch ist die Beschreibung nicht darauf beschränkt, sondern die Offenbarung gilt gleichermaßen für andere zu untersuchende Objekte, wie insbesondere biologisches Material, Textilien oder Kunststoffteile.

Die erfindungsgemäße Vorrichtung umfasst zwei Spiegel, deren reflektierende Seiten in einem Winkel zueinander angeordnet sind und zwischen deren Spiegelfläche mindestens ein Pflanzenblatt aufgenommen werden kann. Der Winkel in dem die Spiegelflächen zueinander angeordnet sind ist kleiner als 180°, beispielsweise 160°, 120°, 100°, 80°, 60° oder besonders bevorzugt 90°.

Die Spiegelflächen sind so zueinander gerichtet, dass sie einfallendes Licht auf das Pflanzenblatt richten können und Licht in die Richtung reflektieren können in die die Spiegelflächen geöffnet sind.

Die einzelnen gegenüberliegenden Spiegelflächen sind gegenüber einer Ebene, die sich zwischen den Spiegelflächen befindet, in einem Winkel von beispielsweise 20° bis 80°, vorzugsweise 30° bis 60° besonders bevorzugt 40° bis 50° geneigt, so dass sie eine Trichterförmige Geometrie ausbilden. Ganz besonders bevorzugt ist ein Neigungswinkel von 41°, 42°, 43°, 44°, 46°, 47°, 48°, 49°, insbesondere 45° gegenüber dieser Ebene. Vorzugsweise sollten die Spiegelflächen bezüglich der Ebene symmetrisch zueinander ausgerichtet sein, also gleiche Winkel zu der Ebene aufweisen, so dass eine Trichterform verwirklicht wird. Die Spiegelflächen können auch V-förmig zusammenlaufen.

Zwischen den zueinander zulaufenden parallel verlaufenden Kanten der Spiegel kann sich ein Abstand befinden, der die Aufnahme eines Objekts, beispielsweise eines oder mehrerer Pflanzenteile ermöglicht, welcher zwischen den zueinander gerichteten Spiegelflächen positioniert ist. In einer anderen Ausführungsform schließen die zueinander zulaufenden parallel verlaufenden Kanten miteinander ab, so dass durch die Spiegel eine V-Form ausgebildet wird.

Bei den Spiegeln handelt es sich um plane Spiegel, jedoch ist auch eine Ausführungsform möglich, bei der Hohlspiegel eingesetzt werden. Besonders bevorzugt ist die erfindungsgemäße Vorrichtung mit Oberflächenspiegeln ausgestattet. Das hat den Vorteil, dass unerwünschte optische Effekte vermieden werden.

Die so zueinander gerichteten Spiegelflächen werden durch eine Halterung in ihrer Position zueinander gehalten. Diese Halterung kann ein Gestell oder ein Tisch sein, der für diese Zwecke entsprechende Aufbauten oder Ebenen besitzt.

Vorteilhafterweise umfasst die Vorrichtung Mittel zur Aufnahme eines Objekts, hier eines Pflanzenblattes, welches zwischen den Spiegelflächen angeordnet ist und eine Positionierung des Pflanzenblattes zwischen den Spiegelflächen ermöglicht. Dabei sollen die Blätter oder das Pflanzenblatt auf der Ebene positioniert sein, die die Spiegelhälften vorzugsweise symmetrisch teilt.

Bei dem Mittel zur Aufnahme eines Pflanzenblattes kann es sich um einen Rahmen handeln, auf den Fäden gespannt sind, welcher die angesprochenen Pflanzenteile zwischen gespannten Fäden aufnimmt und sie so in eine ebene Position bringt. Ebenso können die Mittel zur Aufnahme eines Pflanzenblattes zwei Glas- oder transparente Kunststoffplatten besitzen, zwischen denen die angesprochenen Pflanzenteile aufgenommen und in einer Ebene gehalten werden.

Die Mittel zur Aufnahme eines Pflanzenblattes sind dann zwischen den sich trichterförmig öffnenden Spiegelflächen positioniert und erstrecken sich über die Ebene, die die Spiegelflächen teilt.

Die Mittel zur Aufnahme eines Pflanzenblattes können auf einem gesonderten Gestell fixiert sein, das dann zwischen die Spiegelflächen gestellt wird und/oder kann mit Befestigungsmitteln an der Halterung angebracht sein, welche die beiden Spiegel trägt. Sie können jedoch auch zwischen die Spiegelflächen gehängt werden.

In einer bevorzugten Ausführungsform halten die Mittel zur Aufnahme des Pflanzenblattes eine absorbierende Schablone, die an den Umriss des Pflanzenblattes angrenzt, so dass Streustrahlung und/oder Lichtbeugung vermieden wird. Die absorbierende Schablone ist vorzugsweise schwarz.

Weiterhin umfasst die erfindungsgemäße Vorrichtung eine Kamera, die Reflektions- und Transmissionsstrahlung der Pflanzenblätter registrieren kann. Als Kamera im Sinne der Erfindung ist auch ein Sensor zu verstehen, der elektromagnetische Strahlung registrieren kann.

Vorzugsweise ist die Kamera geeignet Strahlung in einem Spektralbereich von 200 nm bis 1.000.000 nm oder einem Teilbereich davon, besonders bevorzugt 350 nm bis 2500 nm zu registrieren.

In einer bevorzugten Ausführungsform ist die Kamera an der Seite der Vorrichtung positioniert, zu der sich die Spiegelflächen gegeneinander öffnen. Weiterhin bevorzugt ist es, wenn die Kamera mittig zu den zueinander geöffneten Spiegelflächen positioniert ist, beispielsweise über der Ebene, die die Spiegel voneinander teilt und in der sich das Pflanzenblatt oder die anderen Pflanzenbestandteile befinden.

Die Kamera kann jedoch auch an einer anderen Stelle positioniert sein. Wesentlich ist, dass die Kamera so positioniert ist, dass sie das durch die Spiegelflächen reflektierte Licht registrieren kann.

In einer weiterhin bevorzugten Ausführungsform ist die Kamera an eine Führung angebracht, die eine Bewegung der Kamera ermöglicht. Dabei kann es sich um eine Schiene oder ein Förderband handeln, entlang der die Kamera geführt wird um verschiedene Abschnitte des von den Spiegeln reflektierenden Lichtes zu scannen. Die Schiene kann ihrerseits auch parallel verschiebbar sein, so dass die Kamera in verschiedenen Positionen verschoben werden kann. Ebenso ist es möglich, dass die Kamera fest positioniert ist und die Spiegel mit dem Pflanzenblatt Mittel aufweisen, die eine Relativbewegung zu der Kamera ermöglichen. Ebenso kann das Mittel zur Aufnahme eines Objekts mit dem Pflanzenblatt oder das Objekt durch Mittel bewegt werden, die eine Relativbewegung des Objekts zur Kamera ermöglichen.

Vorzugsweise verläuft die Führung entlang einer Ebene, die auf oder parallel zu der Ebene liegt, die die V-förmige Geometrie der Spiegel teilt. In einer anderen Ausführungsform verläuft die Führung für die Kamera quer dazu.

Weiterhin umfasst die erfindungsgemäße Vorrichtung mindestens eine Lichtquelle, beispielsweise eine Lampe, eine UV-Lampe, eine Lampe für Thermalstrahlung oder einen Laser, die die für die Aufnahme der Reflektions- und Transmissionsspektren notwendige Strahlung liefert. Die Lichtquelle sollte Licht in einem Wellenlängenbereich zwischen 200 nm bis 1.000.000 nm oder ein Teilbereich davon, bevorzugt 350 nm und 2500 nm emmitieren. Damit werden Strahlungsbereiche im UV-Bereich bis zur thermalen Strahlung hin umfasst. Dabei kann es sich beispielsweise um eine Halogenlampe oder eine Xenonlampe, die vorzugsweise mit einem oder mehreren Filtern ausgestattet ist, welche die Strahlungsmaxima an die Strahlungsintensität der Strahlungsminima anpasst, handeln. Insbesondere wird eine Lampe bevorzugt, die über ihren gesamten Strahlungsbereich eine im Wesentlichen gleiche Leuchtkraft besitzt. Im Folgenden soll der Begriff Lampe spezielle Lichtquellen, wie Laser nicht ausschließen. Vielmehr sollen auch von diesem Begriff alle möglichen Lichtquellen umfasst sein.

Die Lichtquelle ist so positioniert, dass sie das Pflanzenblatt bestrahlt. Die Lichtquelle kann an unterschiedlichen Stellen positioniert sein.

In einer Ausführungsform ist die Lampe an der Seite der Vorrichtung positioniert, zu der sich die Spiegelflächen gegeneinander öffnen. Sie kann auch an einer Seite positioniert sein, an der sich ein Spiegel befindet, vorzugsweise an dem Ende des Spiegels, das gegen die mittige Ebene geöffnet ist. Es können auch zwei oder mehrere Lichtquellen eingesetzt werden.

In einer besonderen Ausführungsform befinden sich zwischen dem Mittel zur Aufnahme eines Pflanzenblattes und den jeweiligen Spiegelflächen total absorbierende Mittel, wie beispielsweise Platten, Folien oder Pappen oder ähnliche Vorrichtungen die im Wesentlichen parallel zu dem Mittel zur Aufnahme eines Pflanzenblattes verlaufen. In beide total absorbierende Mittel ist eine Linse, vorzugsweise ein Achromat eingearbeitet. Bevorzugt befinden sich die Linsen der beiden total absorbierenden Mittel in jeweils einer Position, die durch eine senkrechte Linie durch die Ebene in der sich das Mittel zur Aufnahme eines Pflanzenblattes, eines Zweiges oder ggf. einer Pflanze befindet, verbunden ist.

Auf einem total absorbierendem Mittel oder auf der Seite eines total absorbierenden Mittels, die der Ebene zugewandt ist, die die einander zugewandten Seiten der Spiegel teilt, kann sich eine Lampe befinden, die das Licht auf das Pflanzenblatt oder die Pflanzenbestandteile richtet.

Bei dieser Ausführungsform beleuchtet die Lampe beispielsweise eine Blattseite, die das Licht reflektiert und das reflektierte Licht tritt durch die Linse, die sich auf der Seite mit der Lampe befindet, trifft auf die Spiegelfläche und wird in die Kamera reflektiert. Auf der anderen Seite des Pflanzenblattes tritt das Licht durch, trifft durch die andere Linse auf den anderen Spiegel und wird dort in Richtung der Kamera abgelenkt.

In einer bevorzugten Ausführungsform besitzt die Vorrichtung Rechenmittel, die die Projektionsbilder der untersuchten Pflanzenteile, wie Blätter so transformiert, dass sie geometrisch zur Deckung kommen, wodurch identische Stellen bezüglich der Reflektion und Transmission miteinander verglichen werden können.

Bei dem erfindungsgemäßen Verfahren wird ein Objekt, beispielsweise ein Pflanzenblatt zwischen zwei Spiegelflächen positioniert, die sich gegenüber der Ebene, in der sich diese

Pflanzenteile befinden in eine Richtung öffnen. Der Winkel in dem die Spiegelflächen zueinander angeordnet werden ist kleiner als 180°, beispielsweise 160°, 120°, 100°, 80°, 60° oder besonders bevorzugt 90°. An Stelle von planaren Spiegeln können auch Hohlspiegel eingesetzt werden. Vorzugsweise werden Oberflächenspiegel eingesetzt, die unerwünschte optische Effekte verhindern.

Das Pflanzenblatt wird dabei durch Mittel zur Aufnahme eines Objekts, beispielsweise eines Pflanzenblattes in einer Ebene fixiert, die zwischen die beiden Spiegelflächen gebracht wird.

Vorzugsweise teilt diese Ebene die Anordnung der Spiegel symmetrisch.

Die Spiegelflächen können zu der Ebene in der sich das Pflanzenteil befindet in einem Winkel von 20° bis 80°, vorzugsweise 30° bis 60° besonders bevorzugt 40° bis 50° geneigt werden, so dass die Spiegel eine trichterförmige Geometrie ausbilden. Ganz besonders bevorzugt wird ein Neigungswinkel von 41°, 42°, 43°, 44°, 46°, 47°, 48°, 49°, insbesondere 45 ° gegenüber dieser Ebene eingestellt.

Das Pflanzenblatt, der Pflanzenzweig oder ggf. die Pflanze wird mit Licht bestrahlt. Die Wellenlängen des Lichtes liegen vorzugsweise in einem Bereich von 200 nm bis 1.000.000 nm oder einem Teilbereich davon, besonders bevorzugt 350 nm bis 2500 nm. Die Bestrahlung erfolgt vorzugsweise durch eine Halogenlampe oder eine Xenonlampe. Vorzugsweise werden Lampen eingesetzt, die über den gesamten Emissionsbereich eine im Wesentlichen gleiche Strahlungsintensität haben. Das kann gegebenenfalls dadurch erreicht werden, dass die Lampen mit Filtern ausgestattet werden, die Strahlungsspitzen herausfiltern, so dass die Emission über den gesamten Bereich möglichst gleichförmig ist. Als Lichtquelle kann jedoch auch ein Laser, eine UV-Lampe oder eine Lampe, die thermale Strahlung emmitiert, eingesetzt werden. Es kann eine Lichtquelle oder auch mindestens zwei Lichtquellen, beispielsweise zwei Lichtquellen eingesetzt werden. Bei Verwendung von zwei Lichtquellen, können diese so angeordnet werden, dass sie das Pflanzenblatt von verschiedenen, beispielsweise entgegen gesetzten Seiten bestrahlen. Die Lichtquelle oder die Lichtquellen werden so positioniert, dass das Pflanzenblatt möglichst homogen bestrahlt wird.

Die Lampe kann an der Seite der Spiegel positioniert werden, zu der sich die Spiegelflächen gegeneinander öffnen. Sie kann auch an einer Seite positioniert werden, an der sich ein Spiegel befindet, vorzugsweise am Ende des Spiegels, das gegen die mittige Ebene geöffnet ist.

Das Licht wird an einer Seite des Pflanzenblattes, des Zweiges oder der Pflanze reflektiert und durchdringt diese teilweise.

Das reflektierte Licht trifft auf den Spiegel, der sich auf der Seite des reflektierenden Pflanzenblattes befindet und wird in Richtung einer Kamera reflektiert, die das Licht registriert. Als Kamera im Sinne der Erfindung kann auch ein Sensor eingesetzt werden, der elektromagnetische Strahlung registrieren kann.

Das Licht, das durch das Pflanzenblatt hindurch tritt, trifft auf den anderen Spiegel, der der Seite zugewandt ist, aus der der Lichtstrahl aus dem Pflanzenblatt heraustritt und wird von dem Spiegel in die Kamera reflektiert, die das durchtretende Licht registriert.

Auf diese Weise wird ein Reflektions- und Transmissionsspektrum eines Pflanzenblattes, eines Zweiges oder einer Pflanze erhalten, welches zum selben Zeitpunkt generiert wird und Informationen über den physiologischen Zustand des untersuchten Objektes ermöglicht. Insbesondere können Informationen über den Stoffwechselzustand, mittels Absporptionseigenschaften des Pflanzenblattes gewonnen werden.

In einer bevorzugten Ausführungsform wird die Kamera an der Seite der Vorrichtung positioniert, zu der sich die Spiegelflächen gegeneinander öffnen. Weiterhin bevorzugt ist es, wenn die Kamera mittig zu den zueinander geöffneten Spiegelflächen positioniert wird, beispielsweise über der Ebene, die die Spiegel voneinander teilt und in der sich das Pflanzenblatt oder die anderen Pflanzenbestandteile befinden.

Die Kamera kann jedoch auch an einer anderen Stelle positioniert werden. Wesentlich ist, dass die Kamera so positioniert wird, dass sie das durch die Spiegelflächen reflektierte Licht registrieren kann.

In einer weiterhin bevorzugten Ausführungsform wird die Kamera entlang einer Linie bewegt, so dass sie die durch die Spiegel reflektierte Strahlung registrieren kann. Dabei kann sie an eine Schiene oder ein Förderband angebracht werden, entlang dem die Kamera geführt wird um verschiedene Abschnitte des von den Spiegeln reflektieren Lichtes zu scannen. Die Schiene kann ihrerseits auch parallel verschoben werden, so dass die Kamera in verschiedenen Positionen verschoben werden kann. In einer anderen Ausführungsform bleibt die Position der Kamera fix und die Spiegel mit dem Pflanzenblatt oder das Pflanzenblatt selbst werden relativ dazu bewegt.

Vorzugsweise wird die Kamera entlang einer Ebene, die auf oder parallel zu der Ebene liegt, die die V-förmige Geometrie der Spiegel teilt geführt. In einer anderen Ausführungsform wird die Kamera quer dazu geführt.

Es ist auch möglich, zwischen die Mittel zur Aufnahme des Pflanzenteiles und die Spiegel jeweils total absorbierende Mittel beispielsweise in Form einer total absorbierenden Platte, Folie oder Pappe oder ähnlichen Vorrichtungen einzubringen, in die eine Linse, vorzugsweise ein Achromat eingearbeitet ist. An einer der beiden total absorbierenden Platten oder äquivalenten Mitteln kann eine Lampe angebracht werden, die auf das Pflanzenteil gerichtet ist. Dann wird das Pflanzenteil beleuchtet, ein Teil des Lichtes wird reflektiert und durch die Linse auf den Spiegel geleitet, der das Licht der Kamera zuführt. Das Licht welches das Pflanzenteil durchdringt, wird durch die Linse auf der anderen Seite des Pflanzenteils auf den anderen Spiegel geleitet und ebenfalls in die Kamera reflektiert.

Um identische Punkte der Objektflächen in den Spektren einander besser zuordnen zu können, können die erhaltenen Bilder durch lineare Transformation zur Deckung gebracht werden.

In einer bevorzugten Ausführungsform wird das Pflanzenblatt in eine Schablone eingelegt, die an den Umriss des Pflanzenblattes angrenzt, so dass Streustrahlung und/oder Lichtbeugung vermieden wird. Die absorbierende Schablone ist vorzugsweise schwarz.

Beispielhaft kann ein Blatt einer Zuckerrübe zwischen aufgespannte Fäden oder zwischen transparenten Platten, wie Glas- oder Plexiglasplatten fixiert werden und zwischen die Spiegelflächen gebracht werden. Die Blätter werden mit der Lampe bestrahlt und die Reflektions- und Transmissionsspektren werden aufgenommen.

Ebenso kann ein anderes Objekt, beispielsweise ein Kunststoffteil oder ein Textilstück zwischen aufgespannte Fäden oder zwischen transparenten Platten, wie Glas- oder Plexiglasplatten fixiert werden und zwischen die Spiegelflächen gebracht werden. Damit ist es möglich die Transmissions- und Reflektionseigenschaften dieser Materialien zu messen und zu verwerten um Qualitätskriterien zu bestimmen. Vorteilhaft hat das Objekt eine im Wesentlichen flache Geometrie oder ist plan. Beispielsweise kann die Schichtdicke, Homogenität, Beschaffenheit oder Einheitlichkeit der Materialien untersucht werden.

### Spezieller Beschreibungsteil:

Im Folgenden wird eine erfindungsgemäße Vorrichtung beschrieben, ohne dass dies einschränkend auszulegen ist.

Es zeigt:
Fig. 1. Eine Halterung mit Spiegeln.
Fig. 2: Ein Mittel zur Aufnahme eines Objekts
Fig. 3: Ein Mittel zur Aufnahme eines Objekts, in das ein Blatt aufgenommen ist
Fig. 4: Eine erfindungsgemäße Vorrichtung

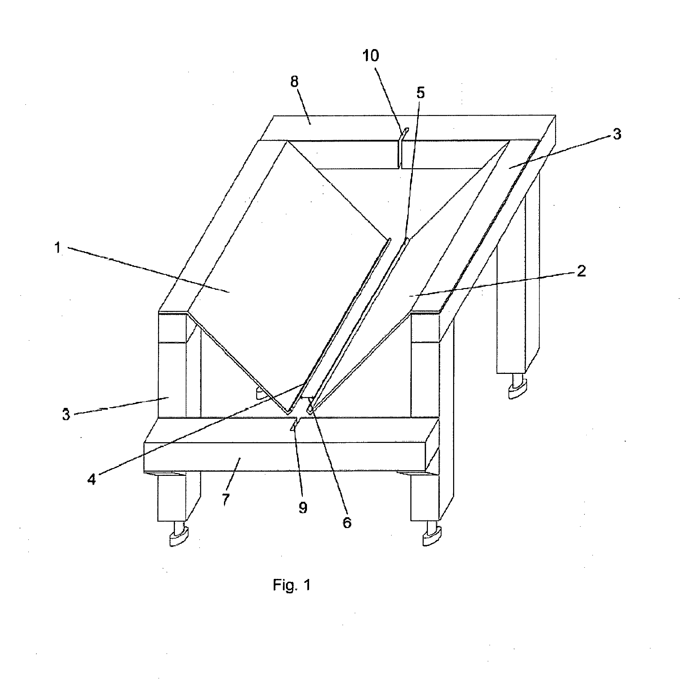

In Figur 1 sind zwei Spiegel 1, 2 dargestellt, die sich in einer Halterung 3 befinden, die die Spiegel 1, 2 in einem Winkel von 90° zueinander positioniert. Die Halterung 3 hat die Gestalt eines Gestells. Zwischen den zueinander zulaufenden parallel verlaufenden Kanten 4, 5 der Spiegel 1, 2 befindet sich ein Abstand 6, der die Aufnahme eines Objekts ermöglicht. Die Halterung 3 weist Balken 7, 8 auf, die Einkerbungen 9, 10 haben, welche Mittel zur Aufnahme eines Objekts fixieren können.

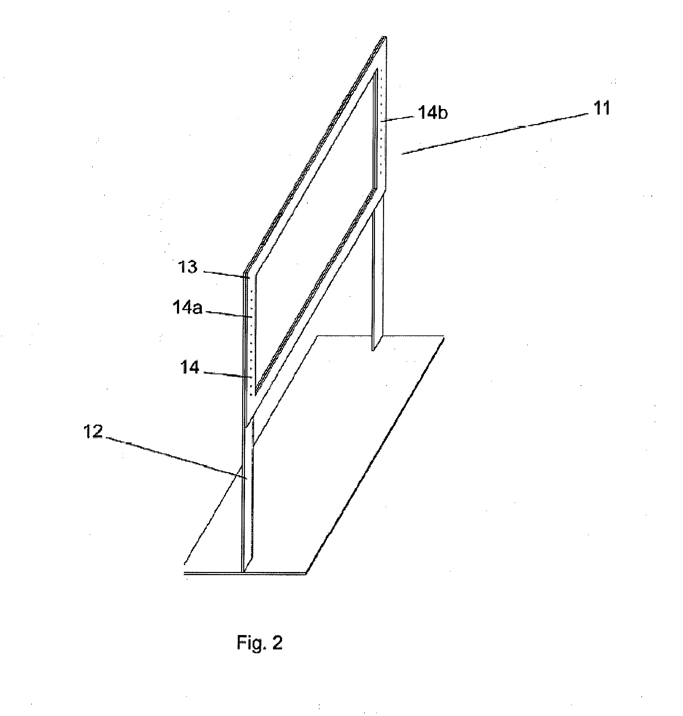

Figur 2 zeigt ein Mittel zur Aufnahme eines Objekts 11, das aus einem Ständer 12 besteht, der einen Rahmen 13 trägt, in den mindestens ein Blatt aufgenommen werden kann. Der Rahmen 13 besitzt an gegenüberliegenden Seiten Bohrungen 14, 14a, 14b .....für die Aufnahme von Fäden oder Drähten, die in den Rahmen 13 aufgespannt werden können.

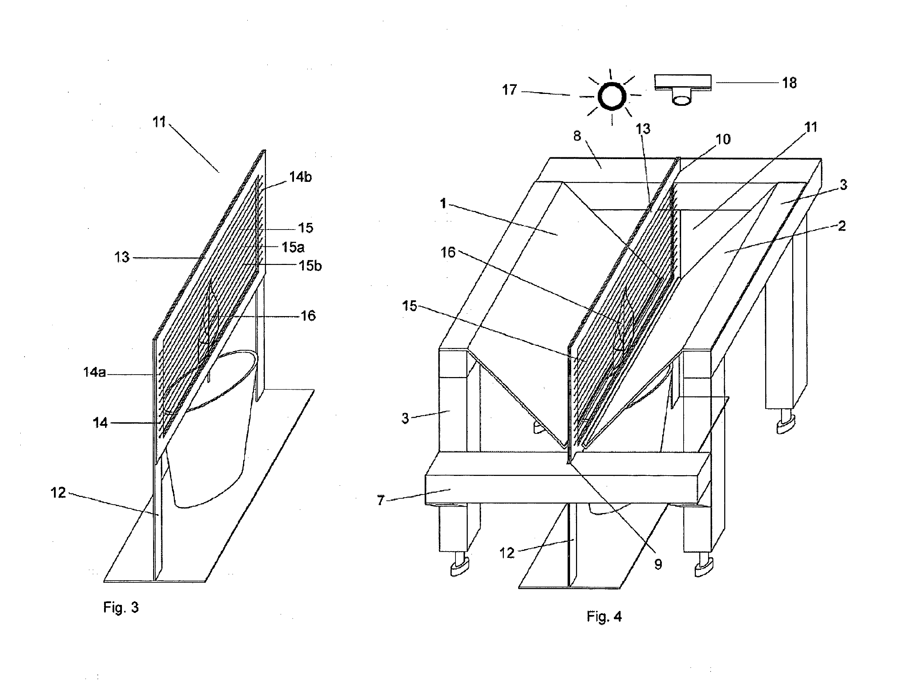

Figur 3 zeigt ein Mittel zur Aufnahme eines Objekts 11 mit einer Pflanze. In ihr haben gleiche Vorrichtungsmerkmale dieselben Bezugszeichen, wie in Figur 2. Zwischen den Bohrungen 14, 14a, 14b, .....sind Fäden 15, 15a, 15b aufgespannt, die ein Blatt 16 einer Pflanze halten.

Figur 4 zeigt eine erfindungsgemäße Vorrichtung. In ihr haben gleiche Vorrichtungsmerkmale dieselben Bezugszeichen, wie in den vorhergehenden Figuren. In Figur 4 ist das Mittel zur Aufnahme des Objekts 11 in den Einkerbungen 9, 10 der Halterung 3 fixiert. Auf der oberen Seite zu der die Spiegel 1, 2 geöffnet sind, befindet sich eine Lichtquelle 17 und eine Kamera 18.

## Patentansprüche

1. Vorrichtung zur Messung der Transmission und Reflektion von Strahlung an einem Objekt,
**gekennzeichnet durch** folgende Mittel,
- zwei Spiegel (1)(2) deren Spiegelflächen in einem Winkel von kleiner als 180° zueinander geneigt sind,
- Mittel zur Aufnahme eines Objekts (11), welche zwischen den Spiegeln angeordnet sind,
- mindestens eine Lichtquelle (17), die so positioniert ist, dass sie das Objekt beleuchtet,
- eine Kamera (18), die an der Seite positioniert ist, zu der sich die Spiegelflächen der beiden Spiegel (1)(2) zueinander öffnen.

2. Vorrichtung nach Anspruch 1,
**dadurch gekennzeichnet,**
**dass** die Spiegelflächen in einem Winkel zwischen 160° bis 60° zueinander geneigt sind.

3. Vorrichtung nach einem der Ansprüche 1 oder 2,
**dadurch gekennzeichnet,**
**dass** die Mittel zur Aufnahme eines Objekts (11) ein Rahmen (13) ist, der mindestens ein Pflanzenteil, biologisches Material, Kunststoffteile oder ein Textil mittels in dem Rahmen (13) gespannter Fäden oder Drähte (15) aufnehmen kann, oder aus zwei transparenten Platten besteht, welche ein Pflanzenteil, biologisches Material, Kunststoffteile oder Textil (16) aufnehmen können.

4. Vorrichtung nach einem der Ansprüche 1 bis 3,
**dadurch gekennzeichnet,**
**dass** das Mittel zur Aufnahme eines Objekts (11) das Objekts (16) plan fixiert und den Winkel, den die Spiegelflächen (1)(2) einschließen symmetrisch teilt.

5. Vorrichtung nach einem der Ansprüche 1 bis 4,
**dadurch gekennzeichnet,**
**dass** die Kamera (18) Licht in einem Wellenlängenbereich von 200 nm bis 1.000.000 nm oder einem Teilbereich davon aufnehmen kann.

6. Vorrichtung nach einem der Ansprüche 1 bis 5,
**dadurch gekennzeichnet,**
**dass** sich zwischen jedem Spiegel (1)(2) und dem Mittel zur Aufnahme eines Objekts (11) total absorbierende Mittel befinden, in die jeweils eine Linse eingebaut ist.

7. Vorrichtung nach einem der Ansprüche 1 bis 6,
**dadurch gekennzeichnet,**
**dass** die Kamera (18) an einer Führung angebracht ist, die eine Bewegung der Kamera (18) zum Scannen des von den Spiegeln (1)(2) reflektierten Lichtes ermöglicht.

8. Vorrichtung nach einem der Ansprüche 1 bis 7,
**dadurch gekennzeichnet,**
**dass** sie über Rechenmittel verfügt, welche die Projektionsbilder des untersuchten Objekts (16) so transformiert, dass sie zur Deckung kommen.

9. Verfahren zur Messung der Transmission und Reflektion von Strahlung an einem Objekt,
- bei dem ein Objekt (16) zwischen zwei Spiegeln (1)(2), die in einem Winkel kleiner als 180° zueinander geneigt sind positioniert wird,
- das Objekt (16) mit Licht bestrahlt wird,
- das durch das Objekt (16) hindurch tretende und das durch das Objekt (16) reflektierte Licht durch die Spiegel (1)(2) zu einer Kamera (18) reflektiert wird, die es registriert.

10. Verfahren nach Anspruch 9,
**dadurch gekennzeichnet,**
**dass** eine Lichtquelle (17) eingesetzt wird, die Licht in einem Wellenlängenbereich von 200 nm bis 1.000.000 nm oder einem Teilbereich davon ausstrahlt.

11. Verfahren nach einem der Ansprüche 9 oder 10,
**dadurch gekennzeichnet, dass** die Spiegelflächen der Spiegel (1)(2) in einem Winkel von kleiner als 160° zueinander geneigt angeordnet werden.

12. Verfahren nach einem der Ansprüche 9 bis 11,
**dadurch gekennzeichnet,**
**dass** die Lichtquelle (17) so positioniert wird, dass sie das Objekt bestrahlt.

13. Verfahren nach einem der Ansprüche 9 bis 12,
**dadurch gekennzeichnet,**
**dass** eine Kamera (18) eingesetzt wird, die Licht in einem Wellenlängenbereich von 200 nm bis 1.000.000 nm oder einem Teilbereich davon registriert.

14. Verfahren nach einem der Ansprüche 9 bis 13,
**dadurch gekennzeichnet**,
zwischen der Kamera (18) und den das Objekt aufnehmenden Spiegeln (1)(2) oder dem Objekt eine Relativbewegung erzeugt wird, so dass die durch die Spiegel reflektierte Strahlung gescannt wird.

15. Verfahren nach einem der Ansprüche 9 bis 14,
**dadurch gekennzeichnet,**
**dass** die durch die Aufnahmen mit der Kamera (18) erhaltenen Bilder durch lineare Transformation zur Deckung gebracht werden.

16. Verfahren nach einem der Ansprüche 9 bis 15,
**dadurch gekennzeichnet,**
**dass** als Objekt mindestens ein Pflanzenteil, biologisches Material, mindestens ein Kunststoffteil oder mindestens ein Textil eingesetzt wird.
